# EUROPEAN PATENT APPLICATION

(11) **EP 0 915 572 A1**
(43) Date of publication of application: **12.05.1999**
(21) Application number: 98308745.3
(22) Date of filing: 26.10.1998
(51) Int. Cl.: H04B 1/38, H01Q 1/24

(54) **Shielding system for mobile and radio telephones**

(30) Priority: 24.10.1997 GB 9722467
(71) Applicant: Nett Enterprises Limited, Hove BN3 7BD (GB); Satchel Design Co. Limited, Street, Somerset BA16 0HD (GB)
(72) Inventor: Tidball, Stephen Andrew, Street, Somerset BA16 0HD (GB); Cohen, Nicholas Mark, Hove BN3 7BD (GB)
(74) Representative: Brown, Michael Stanley

(57) **Abstract**

A mobile or radio telephone includes a body (1) and an aerial (2). A case (3) for the telephone is formed of a laminate material comprising an outer protective layer, a soft inner layer and a central layer (4) of a flexible metal coated mesh or woven fabric. The central layer causes high attenuation of the radiation from at least the areas of the device in close proximity to the user.

## Description

### Field of the Invention

This invention relates to a shielding system for use with mobile and radio telephones which reduces radiation exposure to the user's body, particularly the brain, when operating such telephones.

Mobile telephones are widely used by peripatetic people in order that they may communicate or be accessed substantially regardless of their location. Although some mobile telephones are mounted in vehicles, a large number are carried on the person and are used by holding the earpiece close to the head with a mouthpiece located an appropriate distance away to pick up sound from the user's mouth.

Radio transmission takes place predominantly from a unipole aerial or antenna usually located above the earpiece on the top of the body of the device. Further radiation is also emitted from with the body of the device, normally fabricated from a synthetic polymer, which is substantially transparent to electromagnetic radiation at the frequencies commonly used by mobile telephones. The transmitter power amplifier is usually located close to the earpiece within the body so that this radiation source is close to the ear when the device is used.

When transmitting, an appreciable part of the electromagnetic radiation from the aerial and the body of a mobile telephone, 70 per cent in same situations, enters the skull and is absorbed by the brain tissue. The effects of this absorbed radiation may be deleterious causing short term and long term trauma; the effects can be cumulative. An average mobile telephone emits radiation at a power level lying in the range 100 mW to 2 W at frequencies from 800 MHz to 1800 Mhz; the majority of the power is radiated from the aerial. The power level is variable and controlled to preserve battery power while providing adequate communication levels.

It is an object of the present invention to provide means for reducing the amount of electromagnetic radiation absorbed by the user of a mobile telephone without causing a substantial loss of transmitted power.

### Summary of the Invention

According to the present invention there is provided a shielding system for a mobile telephone or similar portable device emitting electromagnetic radiation, said system comprising a screening case causing high attenuation of the radiation from at least the areas of the device in close proximity to the user.

In a preferred embodiment the shielding system comprises a case which encloses the device and in which at least the side adjacent to the user when the device is operated has a high attenuation factor for the emitted radiation. The case preferably carries a vertical tongue to form a screen and attenuate any radiation from the aerial in the direction of the user.

A mobile telephone conventionally takes the form of a rectangular body having on one side a face which carries a keyboard for operating the device, a mouthpiece for receiving speech for transmission, an earpiece for emitting received speech and, optionally, a screen for displaying visual information. The mouthpiece to earpiece distance is in the region of 100 to 140 mm determined by the mouth to ear distance of an average user. The keyboard and optional viewing screen are customarily located between the mouthpiece and earpiece. In order for the keyboard switches to be operated without difficulty, the width of the body normally lies in the range 40 to 80 mm. The aerial normally protrudes from the upper end of the body with the optional facility of extending it upwards when required. Such extension increases sensitivity and radiation efficiency at some frequencies.

It is customary to enclose the body in a protective case to isolate it from environmental damage. Most cases are fabricated from flexible material, often laminar, having a substantially water-repellent or resistant outer surface and a soft non-abrasive inner surface. The areas of the case covering the keyboard must allow the keyboard to be viewed and are formed from transparent flexible material or are non-existent. The areas over the mouthpiece and the earpiece must allow the transmission of sound which is frequently achieved by perforating these areas.

Cases for mobile telephones must be sufficiently resilient to allow the body to be inserted and removed without difficulty. This can be achieved by the use of elastomeric material to form all or part of the case.

In a preferred embodiment of the present invention at least part of the case for a mobile telephone contains a radiation attenuating material. In the most preferred embodiments, the radiation attenuating material is located within the material forming the case. This is most easily achieved by using a flexible radiation attenuating material attached to or laminated into the material forming the case.

Metals or metallic layers are the most preferred materials for incorporation into the case. To provide adequate flexibility the screening material is preferably in the form of a mesh or woven fabric or metal or coated with metal. In a most preferred form the metallic layer is formed by vacuum deposition, electroless plating or a similar coating process. The metal may be copper, aluminium, nickel, or alloys thereof. A particularly preferred material is a polyester coated with a copper/nickel combination. The important property of the metallic layer is that it should have high absorption for electromagnetic radiation over the band of frequencies used by the associated mobile telephone. It is also important, in most embodiments, that the radiation attenuating material does not attenuate airborne audio signals. Where such signals have to reach the body of the device they can then pass through the radiation attenuating material without any increase in the radiation leakage from the body of the device when it is in the form of a mesh.

In one embodiment, a part of the case is formed from a laminate material having an outer lamina of water-resistant simulated leather material, a central lamina of a flexible metal coated mesh or woven fabric and an inner lamina of a soft material having an outer surface that is substantially abrasion-free. In the area of the earpiece, the inner and outer lamina are preferably removed leaving the central lamina in these areas to allow passage of sound but prevent leakage of radiation.

To prevent direct transmission of radiation from the aerial to the user, a tab or tongue preferably extends upwardly from the top of said part of the case to a height not less than the height of the aerial. The tab or tongue is preferably located on the side closer to the user so that no attenuation of outward transmission takes place.

### Brief Description of the Drawings

Figure 1 is a plan view of the front of a mobile telephone enclosed in a case according to the invention,
Figure 2 is a side view of the mobile telephone case, and
Figure 3 shows the layer of attenuating material built into the case.

### Description of the Preferred Embodiment

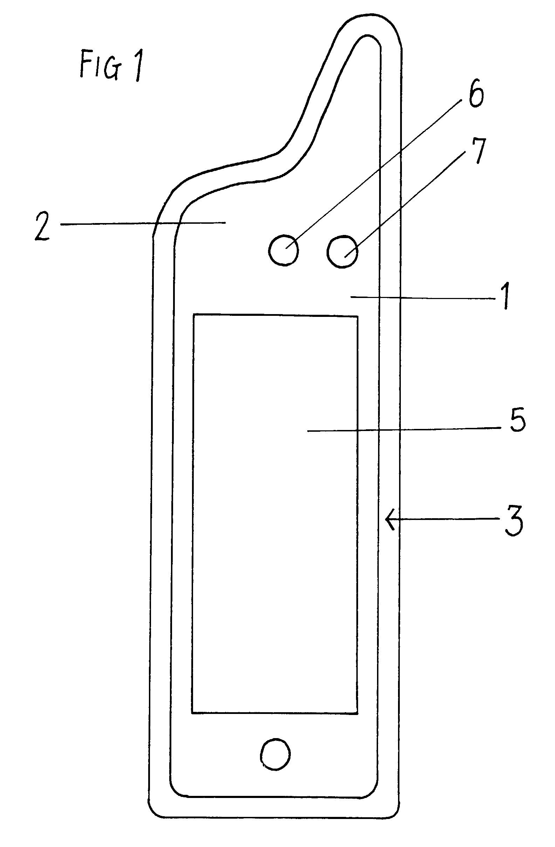

The mobile telephone, see Figure 1, comprises a rectangular body 1 whose outline is indicated by the dashed lines. At the top of the body 1 is an aerial 2 also indicated by dashed lines. The front of the telephone body 1 is covered by a case 3 comprised of an outer protective layer and a soft inner layer with a layer 4 of shielding material containing an electrically conducting mesh between them in that area of the case 3 which, in use, is adjacent the earpiece and the aerial of the telephone body. A transparent flexible window 5 in the central portion of the case 3 allows viewing of the data screen of the telephone and both viewing and manipulation of the pressure sensitive controls of the telephone.

The lower portion of the body 1 includes a mouthpiece area, while the upper portion of the body 1 carries an earpiece area 6 which is in line with apertures in the inner and outer layers of the laminate forming the case 3, but not in the central mesh layer 4. An on-off button 7 is located adjacent the earpiece area 6 and is again located in line with apertures in the inner and outer layers of the laminate forming the case 3, but not in the central mesh layer 4.

As shown in Figure 1, the case 3 has a tongue 8 which extends upwardly from the top of the body 1 to a height not less than the height of the aerial 2. The part of the mesh layer 4 in the tongue 8 forms a screen between the user and the aerial 2 when the mobile telephone is in use and the earpiece 6 is held close to a user's ear.

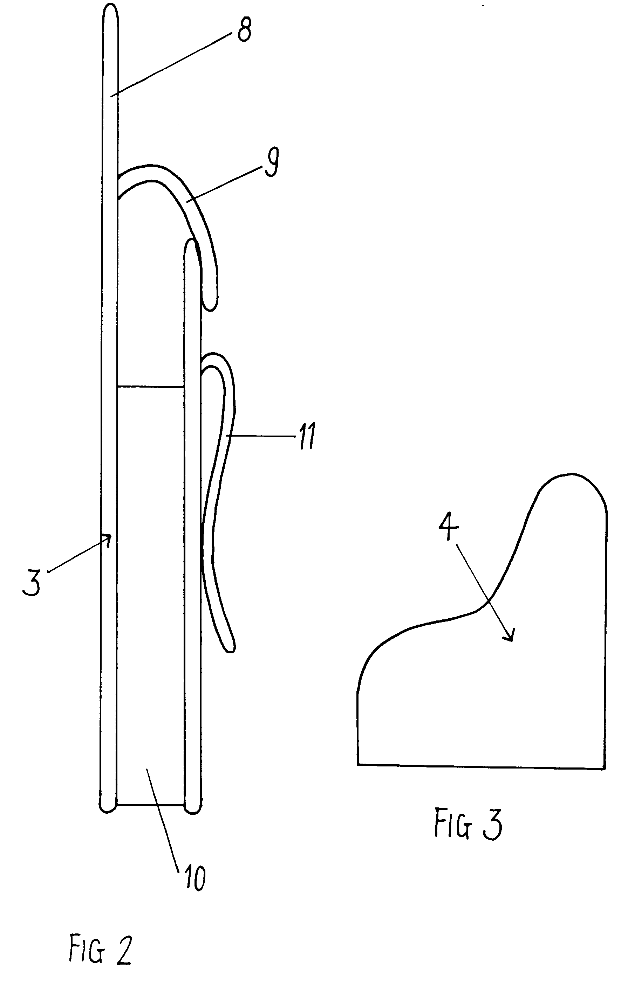

The primary purpose of the screening provided by the case 3 is to prevent direct transmission of radiation from the body 1 and the aerial 2 to the user. In the illustrated embodiment, see Figure 2, the case 3 is shown to be folded around the base and the rear of the body 1 of the mobile telephone and fastened at the top by an attachment 9, such as one formed from the material sold under the trade mark "Velcro". To ensure that the body 1 is firmly held within the case 3, the edges of the portions abutting the front and rear of the body 1 are connected by a strip 10 of elastomeric material. A clip 11 fitted to the rear of the case 3 allows the cased body 1 to be attached to a belt, pocket or other part of the user's person.

The body 1 of the telephone may be removed from the case 3 for servicing or repair by unfastening the attachment 9 and sliding the body upwards. Only one particular case configuration is shown in the drawings, but it will be appreciated that the case configuration may be such as to accommodate any of the mobile phone body configurations at present in use. For example, the case may be designed to accommodate a mobile phone body having an aerial mounted on the rear of the telephone body rather than extending upwardly from the telephone body.

The layer 4 of attenuating material shown in Figure 3 is of such size that it will shield the user's brain from the radiation emanating from the earpiece and the aerial. A more extensive layer may, of course, be employed if required.

## Claims

1. A shielding system for a mobile telephone or similar portable device emitting electromagnet radiation, said system comprising a screening case causing high attenuation of the radiation from at least the areas of the device in close proximity to the user.

2. A shielding system as claimed in Claim 1, in which the case encloses the device and in which at least the side adjacent to the user when the device is operated has a high attenuation factor for the emitted radiation.

3. A shielding system as claimed in either of the preceding claims and for a device having a vertical aerial, in which the case carries a vertical tongue to form a screen and attenuate any radiation from the aerial in the direction of the user.

4. A shielding system as claimed in any one of the preceding claims, which includes a flexible radiation attenuating material attached to or laminated into the material forming the case.

5. A shielding system as claimed in Claim 4, in which the case is formed from a laminate material having an outer layer of water-resistant material, a central layer of a flexible metal coated mesh or woven fabric and an inner lamina of a soft material.

6. A shielding system as claimed in Claim 5, in which the inner and outer lamina are formed with apertures in the area of the earpiece of the device, leaving the central lamina in this area to allow passage of sound but prevent radiation.

7. A shielding system as claimed in Claim 4, in which the radiation attenuating material comprises a layer extending over the earpiece and the aerial of the device.

8. A shielding system for a mobile or radio telephone substantially as hereinbefore described with reference to and as shown in the accompanying drawings.

9. A mobile or radio telephone having a shielding system as claimed in any one of the preceding claims.
